# EUROPEAN PATENT APPLICATION

(11) **EP 2 548 628 A1**
(43) Date of publication of application: **23.01.2013**
(21) Application number: 11174529.5
(22) Date of filing: 19.07.2011
(51) Int. Cl.: B01D 53/50

(54) **Method and system for separation of sulphate from scrubbing liquids**

(71) Applicant: PureteQ A/S, 5700 Svendborg (DK); Søgaard, Dennis, 7600 Struer (DK)
(72) Inventor: SØGAARD, Dennis, 7600 Struer (DK)
(74) Representative: Bender, Mikkel

(57) **Abstract**

The present invention relates to a method and system for separating sulphate from a scrubbing liquid. Flue gas is treated in a scrubbing zone for SO₂ absorption in an aqueous scrubbing liquid. The scrubbing liquid is subsequently regenerated with CaO, CaCO₃, Ca(OH)₂ and/or a mixture thereof in two successive regeneration zones, wherein part of the liquid is recirculated into the scrubbing zone after the treatment in the first regeneration zone.

## Description

### FIELD OF THE INVENTION

The present invention relates to a method and system for separating sulphate from a scrubbing liquid.

### BACKGROUND OF THE INVENTION

Sulphur dioxide (SO₂) is a gas which is created by the oxidation of sulphur containing materials such as coal, oil and natural gas. It has long been deemed desirable to limit the concentration of sulphur dioxide in flue gasses which are released to the atmosphere. This has commonly been achieved by treating the industrial combustion gases by wet scrubbing with an aqueous alkaline scrubbing liquid. The resulting scrubbing liquids may contain considerable loads of sulphate, typically in the form of highly soluble sodium sulphate (NaSO₄). This is in particular the case where comparatively low amounts of calcium carbonate are used in wet scrubbing to prevent the formation of calcium sulphate precipitates within the wet scrubber. Increased sulphate concentrations in wastewater are generally undesirable due to the corrosiveness of sulphate towards copper conduits and the risk of reductive formation of toxic and corrosive hydrogen sulphide (H₂S).

US3873532 disclose a method for removing sulphur dioxide from flue gasses by wet scrubbing. According to the specification, the sulphur dioxide containing gases are conducted to a gas scrubber, where they are washed with an aqueous alkaline scrubbing liquid based on sodium hydroxide or sodium carbonate. A partial flow of the liquid is drawn off from the gas scrubber to be regenerated, and is conducted to a vessel for the addition of calcium ions in the form of Ca(OH)₂. The liquid is fed to a sedimentation device for sedimentation of precipitated calcium sulphate, which is recycled to the vessel. The washing liquid supernatant is fed to a device for addition of sodium carbonate for further reduction of calcium ions before the liquid is returned to the scrubber. It is disclosed that this method prevents scaling in the scrubbing apparatus.

WO94/16797 discloses a method for cleaning sulphur dioxide containing flue gases. The gases are treated in a gas scrubber for the absorption of sulphur dioxide in an aqueous alkaline washing liquid such as NaOH. A partial flow of the liquid is drawn off from the washing liquid to be regenerated by the addition of calcium ions (e.g. Ca(OH)₂) to precipitate calcium sulphate in a sedimentation device. The precipitated calcium sulphate is recycled to the partial flow of washing liquid before the addition of calcium ions for the promotion of crystal growth and eventually large and pure gypsum crystals. The washing liquid supernatant is fed to a different vessel for the addition of sodium carbonate in order to precipitate calcium ions in form of calcium carbonate. This precipitate is sedimented prior to the redirection of the liquid back into the scrubber. The precipitated calcium carbonate is recycled to the step of addition of calcium ions to the liquid.

However, one of the drawbacks of these two prior art methods is that the recycled liquid must pass through all the steps of the processes, rendering the methods both cumbersome and material and energy demanding. It follows that the larger volumes of liquid to be treated, larger volumes of e.g. chemicals must be used.

The present invention thus sets out to provide a method of treating sulphur dioxide containing flue gases that deals with the above mentioned drawbacks of the prior art methods. Accordingly, the invention provide a simple method for regenerating the scrubbing liquid in a zone outside the scrubber, and further, the method is capable of separating sulphate from the liquid to a degree that allows disposal of the liquid into the public sewer system (maximum sulphate concentration may be 500-1500 mg/L).

Thus, it is a first object of the present invention to provide a method of treating sulphur dioxide containing flue gases in a wet scrubber, which method allows part of the scrubbing liquid used in the wet scrubber to be discharged in the public sewer or the like.

It is a second object of the present invention to provide a method of treating sulphur dioxide containing flue gases in a wet scrubber, wherein precipitation inside the wet scrubber is reduced, in particular where calcium salt precipitation and scaling, such as calcium sulphate precipitation is prevented or reduced.

It is a third object of the present invention to provide a method of treating sulphur dioxide containing flue gases in a wet scrubber, which method is simple, lowmaintenance and/or cost-effective.

It is a fourth object of the present invention to provide a method of treating sulphur dioxide containing flue gases in a wet scrubber, where purifying of the scrubbing liquid is performed in a zone outside the scrubbers.

It is another object of the present invention to provide a method of treating sulphur dioxide containing flue gases in a wet scrubber, which method reduces the consumption of chemicals and/or water and/or reduces the amount of wastewater.

### SUMMARY OF THE INVENTION

It has been found that one or more of these objects are efficiently addressed by a method of treating a sulphur dioxide containing flue gas, the method comprising
- a first step of contacting the flue gas with an aqueous scrubbing liquid in a scrubbing zone leading to absorption of sulphur dioxide into the liquid,
- a second step of establishing an at least partial flow of the liquid emanating from the first step from the scrubbing zone into a first regeneration zone,
- a third step of cooling the liquid to below 60 °C,
- a fourth step of adjusting the pH of the liquid to 6-8 by adding CaO, CaCO₃, Ca(OH)₂ and/or a mixture thereof for forming a first precipitate containing sulphur and a first liquid supernatant,
- a fifth step of separating the first precipitate from the first liquid supernatant,
- a sixth step of recirculating a first partial flow of the first liquid supernatant emanating from the fifth step into the scrubbing zone for further absorption of sulphur dioxide, wherein the method further comprises
- a seventh step of establishing a second partial flow of the first liquid supernatant emanating from the fifth step into a second regeneration zone,
- an eighth step of adding CaO, CaCO₃, Ca(OH)₂ and/or a mixture thereof to the liquid in the second regeneration zone for adjusting the pH of the liquid to 9-14 for forming a second precipitate containing sulphur and a second liquid supernatant,
- a ninth step of separating the second precipitate from the second liquid supernatant,
- a tenth step of contacting the second liquid supernatant emanating from the ninth step with a CO₂ containing gas for lowering the pH of the liquid to 5-8,
- an eleventh step of discharging the resulting liquid emanating from the tenth step into a sewer system.

In another aspect, the present invention relates to a system for performing the method of the present invention, the system comprising a scrubbing zone fluidly connected to a first regeneration zone, a second regeneration zone fluidly connected to the first regeneration zone, and means to recirculate a fluid from the first regeneration zone to the scrubbing zone.

### BRIEF DESCRIPTION OF THE DRAWINGS

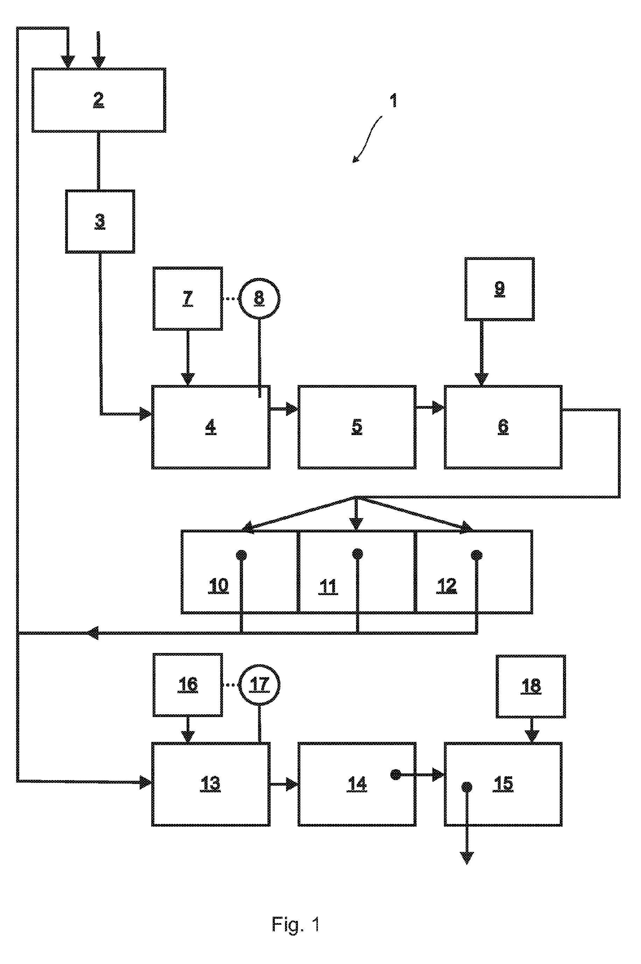

Some of the embodiments of this invention will be described in detail, with reference to the following figure, wherein Fig. 1 shows a schematic flow chart of an embodiment of the inventive method and system.

### DETAILED DESCRIPTION OF THE INVENTION

During the work leading to the present invention, the inventor surprisingly found that it is possible to meet all the above objects in a very simple method wherein the scrubbing liquid is regenerated in two treatment sequences in separate regeneration zones.

Thus, in a first aspect the invention relates to a method of treating a sulphur dioxide containing flue gas, the method comprising
- a first step of contacting the flue gas with an aqueous scrubbing liquid in a scrubbing zone leading to absorption of sulphur dioxide into the liquid,
- a second step of establishing an at least partial flow of the liquid emanating from the first step from the scrubbing zone into a first regeneration zone,
- a third step of cooling the liquid to below 60 °C,
- a fourth step of adjusting the pH of the liquid to 6-8 by adding CaO, CaCO₃, Ca(OH)₂ and/or a mixture thereof for forming a first precipitate containing sulphur and a first liquid supernatant,
- a fifth step of separating the first precipitate from the first liquid supernatant,
- a sixth step of recirculating a first partial flow of the first liquid supernatant emanating from the fifth step into the scrubbing zone for further absorption of sulphur dioxide, wherein the method further comprises
- a seventh step of establishing a second partial flow of the first liquid supernatant emanating from the fifth step into a second regeneration zone,
- an eighth step of adding CaO, CaCO₃, Ca(OH)₂ and/or a mixture thereof to the liquid in the second regeneration zone for adjusting the pH of the liquid to 9-14 for forming a second precipitate containing sulphur and a second liquid supernatant,
- a ninth step of separating the second precipitate from the second liquid supernatant,
- a tenth step of contacting the second liquid supernatant emanating from the ninth step with a CO₂ containing gas for lowering the pH of the liquid to 5-8,
- an eleventh step of discharging the resulting liquid emanating from the tenth step into a sewer system.

The overall goal of the absorption process in the first step is to remove gas phase impurities such as SO₂ from the flue gas. The scrubbing zone will typically comprise one or more conventional wet scrubbers that facilitate and maximise contact between the scrubbing liquid and the flue gas. Typically, the scrubbing liquid will be re-circulated within the scrubbing zone to enhance absorption of SO₂.

According to the present invention, the scrubbing liquid may initially be tap water. The present invention obviates the need for adding alkaline compounds such as NaOH to the scrubbing zone since any such pH adjustment is "outsourced" to the regeneration zones. As the process proceeds, the composition of the scrubbing liquid in the scrubbing zone will obviously change over time due to absorption of SO₂ and other gaseous compound in the liquid as well as due to the inherent recycling step of the present invention.

At least a part of the scrubbing liquid is withdrawn from the scrubbing zone and fed into a first regeneration zone wherein the scrubbing liquid is regenerated by precipitation of a sulphur containing precipitate such as calcium sulphate. At least part of the scrubbing liquid may be recycled from the first regeneration zone into the scrubbing zone, another part may be fed from the first zone into a second regeneration zone for further precipitation of sulphate to a level that allows discharge of the liquid into a sewer system.

Thus, the first zone regenerates and purifies the liquid from sulphate to a level that allows the liquid to be effective for further treating the flue gas in the scrubbing zone, i.e. a level that allows the liquid to be recycled to the scrubbing zone. Surprisingly, it has been found that the reintroduction of the liquid supernatant into the scrubber at this step, and thus the use of the supernatant as scrubbing liquid in the wet scrubber, leads to a significant decrease in precipitation of calcium salts inside the scrubber compared to prior art methods.

Typically, the sulphur containing precipitates of the fourth and the eighth step, respectively, will contain calcium sulphate (CaSO₄) and/or calcium sulphite (CaSO₃). The precipitate may be discarded or it may be reused for a different purpose e.g. sulphate may be used in the cement industry. In the respective fifth and ninth steps, the precipitate is separated from the liquid, preferably by gravity sedimentation.

The liquid fed from the scrubbing zone into the first regeneration zone is cooled to below 60 °C. Preferably, the liquid is cooled to below 50 °C in the third step; most preferably to 20-40 °C. The cooling step can for example be carried out by ordinary heat exchange means. The cooling effects a lower solubility of sulphate containing precipitates and was also found to result in a precipitate slurry that has a lower viscosity as compared to higher temperatures. This facilitates withdrawal by pumping of the precipitate slurry. Also, below 60 °C less corrosion occurred in the subsequent regeneration zone.

The steady state pH of the liquid leaving the scrubber is acidic ― typically around pH 0-2. Preferably, the method of the present invention is carried out as a continuous method. In this case, the pH of the liquid within the scrubbing zone will become relatively constant, which is referred to herein as steady state.

In the first regeneration zone the pH of the liquid is adjusted to about 6-8 by adding CaO, CaCO₃ and/or Ca(OH)₂, whereby a sulphur containing precipitate is obtained. According to one embodiment of the invention, this may be done by directing the liquid into at least one reactor, preferably two or more reactors such as four reactors fluidly connected in series e.g. by using an ordinary overflow system. Having multiple series-connected reactors leads to more constant operational conditions because variations are minimized from the first to the second reactor and so forth. In such embodiments, CaO, CaCO₃ and/or Ca(OH)₂ is preferably added only to the first reactor of the series.

The effect of CaO, CaCO₃ and/or calcium hydroxide addition in the fourth step is that the liquid is neutralized (around pH 7) and that calcium sulphate (CaSO₄) and or calcium sulphite (CaSO₃) precipitate to form a liquid suspension. However, approximately 2 g/L CaSO₄ will typically still remain dissolved in the aqueous phase. This is a too high sulphate concentration for discharge of the solution into the public sewer; however, it has been found that such solution can be efficiently re-used for absorbing further SO₂ from flue gas. The key advancement of the present invention lies therefore in the fact that only a part of the total process flow is purified for final discharge in the second regeneration zone whereas the other part is recycled in the system.

In the second regeneration zone, increased precipitation of sulphur containing precipitate is obtained in view of the lower solubility of calcium sulphate and/or calcium sulphite at basic pH levels. Also, heavy metal hydroxides will typically precipitate if heavy metals were present in the original flue gas.

In the tenth step, a CO₂ containing gas is used for pH adjustment since carbon dioxide is a mild acid which makes it easier to prevent too low pH values. Such too low pH values may be attained if e.g. HCl is used for lowering the pH. By contrast, the present system of constant CO₂ bubbling combined with CaCO₃ precipitation is excellently buffered with respect to pH. Such controlled conditions are highly desirable in particular if the method is carried out as a continuous process.

The treatment of the present invention will typically result in a liquid having a final concentration of dissolved sulphate which is below 200 mg/l and a pH of about 7. Such an aqueous solution can then be discharged into the public sewer system because it has a substantially neutral pH and a sulphate concentration below the regulatory limit. The precipitate may be reused for any suitable purpose or it may be disposed as waste.

Optionally, any precipitates created in the tenth step are separated from the liquid supernatant prior to the discharge of the same in the eleventh step. Such separation can be carried out by gravity sedimentation.

In one embodiment of the present invention, no base is introduced into the scrubbing zone except from what is recirculated in the sixth step. In prior art processes one typically adds alkaline material to the scrubber, e.g. lime or NaOH. However, according to the present invention it has been surprisingly found that a satisfactory removal of SO₂ from the flue gas can also be achieved by simply using tap water as the scrubbing liquid in combination with the unique regeneration and recirculation scheme of the present invention. This greatly facilitates operation of wet scrubber units in that unwanted calcium containing precipitates and/or excessive amounts of sodium salt formation within the scrubbing zone are avoided. According to the present invention, there might be a small carryover of base (alkaline material) from the first regeneration zone back into the scrubbing zone. However, these amounts are small compared to prior art desulfurization systems.

According to another embodiment, the aqueous scrubbing liquid in the scrubbing zone has an average steady state pH of 3-6, preferably 3-5. According to this embodiment a slightly acidic scrubbing liquid is maintained. By contrast, prior art systems often operate at neutral steady state pH values which makes it imperative to use large amounts of alkaline material within the scrubbing zone. By avoiding this according to the present invention undesired precipitate formation within the scrubbing zone is avoided.

Preferably, the method of the present invention is continuous in that a continuous flow of scrubbing liquid into the first regeneration zone, a continuous recycling flow of liquid from the first regeneration zone into the scrubbing zone, a continuous flow of liquid from the first to the second regeneration zone, a continuous discharge of liquid from the second regeneration zone, a continuous flow of flue gas through the scrubbing zone, and a continuous flow of fresh scrubbing liquid, e.g. fresh tap water, into the scrubbing zone is established.

According to another embodiment, the CO₂ containing gas of the tenth step contains at least 1000 ppm by volume of CO₂. More preferably, it contains at least 10000 ppm by volume of CO₂. By using these levels of CO₂ the pH adjustment of the tenth step works particularly advantageous.

According to another embodiment, the liquid of the eleventh step has a concentration of below 250 mg sulphate per litre. More preferably, the liquid of the eleventh step has a concentration of below 200 mg sulphate per litre. The overall goal is to reduce the sulphate level of the finally regenerated liquid to a level that allows discharge into the public sewer.

According to another embodiment, the pH value is adjusted to 6.5 ― 7.5 in the fourth step. The method of the present invention has been found to operate particularly efficient in this pH interval.

According to a preferred embodiment, Ca(OH)₂ is used in the fourth and in the eighth step. This has been found to result in a precipitation process that is particularly stable and efficient.

According to another embodiment, the fifth step is carried out by sedimentation of precipitate in two or more fluidly connected sedimentation tanks.

According to another embodiment, the liquid is cooled to 25-35 °C in the third step. At this temperature interval the resulting precipitate slurry was found to exhibit a particularly low viscosity. Also, corrosion problems are minimized at this temperature interval.

According to another embodiment, the CO₂-containing gas of the tenth step is exhaust gas from a combustion device, optionally mixed with ambient air. This is a very simple and cost-efficient way of re-using some of the exhaust gas and to absorb some of the CO₂ contained in the same.

According to another embodiment, the first partial flow of the sixth step is at least equal to the amount of the second partial flow of the seventh step expressed in volume over time. In other words a considerable part of the flow is recirculated into the scrubbing zone, rather than being ultimately regenerated for discharge in the second regeneration zone. This makes the present method particularly cost-effective and efficient as the use of alkaline material such as Ca(OH)₂ is greatly reduced. Preferably, the first partial flow of the sixth step is at least two times, most preferably at least five times, the amount of the second partial flow of the seventh step expressed in volume over time.

According to another embodiment, the fourth step further comprises bubbling the liquid with a CO₂ containing gas after adjusting the pH of the liquid to 6-8 by adding CaO, CaCO₃, Ca(OH)₂ and/or a mixture thereof.

In a preferred embodiment, the partial flow of the second step constitutes at least 10 vol%, such as at least 20 vol%, of the scrubbing liquid in the scrubbing zone per hour. If, for example, the total volume of scrubbing liquid in the scrubbing zone is 7000 litres a flow of at least 700 litres per hour into the first regeneration zone is established. This has been found to result in a particularly stable and efficient process.

In a second aspect, the invention relates to a system comprising a scrubbing zone having means for contacting a flue gas with an aqueous scrubbing liquid, wherein the scrubbing zone is fluidly connected to a first regeneration zone, wherein the system further comprises a second regeneration zone fluidly connected to the first regeneration zone and means to recirculate a fluid from the first regeneration zone to the scrubbing zone, wherein the respective first and the second regeneration zones each comprise means for pH adjustment of the treated liquid by addition of CaO, CaCO₃, Ca(OH)₂ and/or a mixture thereof.

The scrubbing zone will typically comprise one or more conventional wet scrubbers. The respective first and second regeneration zones will typically comprise at least one reactor, at least one pH sensor disposed in the reactor, a storage container for CaO, CaCO₃, Ca(OH)₂ and/or a mixture thereof in solid form, liquid form, or as suspension, at least one pump for transferring the alkaline material into the reactor, and one or more sedimentation tanks. The second regeneration zone will typically also comprise an additional reactor and means for bubbling a CO₂ containing gas through liquid in that reactor.

In one embodiment, a plurality of fluidly series-connected sedimentation tanks are used in the first regeneration zone. Using a plurality of sedimentation tanks in this step increases the available surface area for sedimentation.

Fig. 1 shows a schematic flow chart of an embodiment of the inventive method and system 1. Flue gas is treated in wet scrubber 2 using an aqueous scrubbing liquid with an initial pH of between 6 and 8. The resulting acidic sulphate containing solution is lead through heat exchanger 3 to cool it to below 50 deg.C before being directed into reactor 4. Here, the solution is mixed with CaCO₃ and/or Ca(OH)₂ from container 7. The influx of CaCO₃ and/or Ca(OH)₂ from container 7 is regulated by a feedback loop involving pH sensor 8, a valve and a pump (not shown). pH sensor 8 measures the pH value of the mixture in reactor 4. If the pH reaches a circum-neutral upper cut-off value, e.g. pH 7.5, the influx of Ca(OH)₂ is stopped until the pH falls below a lower cut-off value, e.g. pH 6.5.

The mixture is directed further via reactor 5 into volume buffer container 6 which is connected to an air pump 9 which can inject air or CO₂-enriched air into the mixture. From there the suspension is directed into sedimentation tanks 10, 11, 12. In sedimentation tanks 10, 11, 12 the precipitate, which may contain calcium sulphate and/or calcium sulphite, is allowed to settled by gravity sedimentation. The sedimented precipitate can be removed from the tanks, for example through an appropriate outlet (not shown). The resulting supernatant is withdrawn and can either be recirculated into wet scrubber 2 for purifying flue gas or is directed into reactor 13.

In the latter, Ca(OH)₂ can be added to the solution from container 16, wherein the influx is again regulated by a feedback loop involving a pH sensor 17, a valve and a pump (not shown). The pH sensor measures the pH value of the mixture and triggers influx of Ca(OH)₂ up to a cut-off value of e.g. pH 11. The mixture is transferred to sedimentation tank 14 where the suspension that contains calcium sulphate, calcium sulphite, calcium carbonate and/or heavy metal precipitates is separated into a precipitate and a supernatant by gravity sedimentation. The supernatant is transferred to container 15 where it is aerated with CO₂ enriched air using air pump 18. The resulting solution has sufficiently low concentrations of dissolved sulphate and heavy metals and can be discharged into the public sewer.

### Example 1 - Wet scrubbing of flue gas from waste incineration

Flue gas from waste incineration was treated in a system according to the invention. Approx. 40,000 normal m³ flue gases entered the scrubbing zone per hour. The scrubbing liquid was sprayed from nozzles within the scrubber into contact with the gas. To obtain a higher contact surface between liquid and gas, the scrubbing liquid was continuously recirculated in a loop circumventing the regeneration zone. The flow of this loop was approx. 330 m³ per hour.

The volume of liquid in the scrubbing zone was approx. 7 m³. Initially, this liquid was tap water, but as the process was running, the supernatant liquid of the first regeneration zone was recirculated and mixed with the tap water. This liquid had a circumneutral pH prior to contacting the acids (e.g. sulphur dioxide) of the flue gas.

A flow of 1500 litres per hour of the scrubbing liquid was led into the first regeneration zone, first entering a heat exchanger for cooling to approx. 30 °C, and from there the liquid was directed into the first reactor. Ca(OH)₂ was added to the first reactor. The amount of Ca(OH)₂ was regulated by a feedback loop involving a pH sensor, a valve and a pump. The pH sensor measured the pH value of the mixture in the reactor and was adjusted to stop the flow of Ca(OH)₂ into the first reactor when the pH reached 7. In this way, approx. 25 kg of Ca(OH)₂ was added each hour. The first reactor was connected by a regular overflow system to a second reactor and so forth to end up in a fourth reactor.

From here, the liquid was directed into a container that was aerated with a CO₂ containing gas.

From this container the liquid was pumped into a distribution pipe that distributed the liquid into 28 tanks each having a surface area of 1 m² in which the precipitated calcium sulphate was allowed to sediment by gravity. The filtration product was pressed and the resulting liquid, together with the supernatant liquid from the sedimentation tanks, was recirculated into the scrubber as regenerated scrubbing liquid.

### Example 2 - Purification of scrubbing liquid to allow discharge into the sewer

Flue gas was treated as described in example 1, however part of the supernatant liquid was directed into a container for further purification to allow discharge into the sewer. The purpose of this treatment is to further reduce the content of dissolved sulphate to a level below the threshold limits for discharge into the sewer.

A flow of approx. 200 litres per hour of the supernatant emanating from the sedimentation tanks was directed into a second regeneration zone. The liquid was directed into a reactor wherein Ca(OH)₂ was added to the solution. A pH sensor measured the pH value of the mixture and triggered the influx of Ca(OH)₂ up to a cut-off value of pH 11. The mixture was transferred to another container where it was aerated with CO₂ enriched air using an air pump to lower the pH to pH 7. The resulting suspension that contained precipitated calcium sulphate and calcium carbonate was then led into a sedimentation tank to separate the solid phase from the liquid phase by gravity. The resulting liquid had a concentration of dissolved sulphate of 200 mg per litre and a neutral pH and was therefore acceptable for discharge into the public sewer.

## Claims

1. A method of treating a sulphur dioxide containing flue gas, the method comprising
- a first step of contacting the flue gas with an aqueous scrubbing liquid in a scrubbing zone leading to absorption of sulphur dioxide into the liquid,
- a second step of establishing an at least partial flow of the liquid emanating from the first step from the scrubbing zone into a first regeneration zone,
- a third step of cooling the liquid to below 60 °C,
- a fourth step of adjusting the pH of the liquid to 6-8 by adding CaO, CaCO₃, Ca(OH)₂ or a mixture thereof for forming a first precipitate containing sulphur and a first liquid supernatant,
- a fifth step of separating the first precipitate from the first liquid supernatant,
- a sixth step of recirculating a first partial flow of the first liquid supernatant emanating from the fifth step into the scrubbing zone for further absorption of sulphur dioxide, wherein the method further comprises
- a seventh step of establishing a second partial flow of the first liquid supernatant emanating from the fifth step into a second regeneration zone,
- an eighth step of adding CaO, CaCO₃, Ca(OH)₂ and/or a mixture thereof to the liquid in the second regeneration zone for adjusting the pH of the liquid to 9-14 for forming a second precipitate containing sulphur and a second liquid supernatant,
- a ninth step of separating the second precipitate from the second liquid supernatant,
- a tenth step of contacting the second liquid supernatant emanating from the ninth step with a CO₂ containing gas for lowering the pH of the liquid to 5-8,
- an eleventh step of discharging the resulting liquid emanating from the tenth step into a sewer system.

2. A method according to claim 1, wherein no base is introduced into the scrubbing zone except from what is recirculated in the sixth step.

3. A method according to claims 1 or 2, wherein the method is continuous.

4. A method according to any of the preceding claims, wherein the CO₂ containing gas of the tenth step contains at least 1000 ppm by volume of CO₂

5. A method according to any of the preceding claims, wherein the liquid of the eleventh step has a concentration of below 250 mg sulphate per litre.

6. A method according to any of the above claims, wherein the pH value is adjusted to 6.5 ― 7.5 in the fourth step.

7. A method according to any of the above claims, wherein Ca(OH)₂ is used in the fourth and in the eighth step.

8. A method according to any of the above claims, wherein the fifth step is carried out by sedimentation of precipitate in two or more fluidly connected sedimentation tanks.

9. A method according to any of the above claims, wherein the liquid is cooled to 25-35 °C in the third step.

10. A method according to any of the above claims, wherein the CO₂-containing gas of the tenth step is exhaust gas from a combustion device, optionally mixed with ambient air.

11. A method according to any of the above claims, wherein the first partial flow of the sixth step is at least equal to the amount of the second partial flow of the seventh step expressed in volume over time.

12. A method according to any of the above claims, wherein the first partial flow of the sixth step is at least five times the amount of the second partial flow of the seventh step expressed in volume over time.

13. A method according to any of the above claims, wherein the fourth step further comprises bubbling the liquid with a CO₂ containing gas after adjusting the pH of the liquid to 6-8 by adding CaO, CaCO₃, Ca(OH)₂ and/or a mixture thereof.

14. A method according to any of the above claims, wherein the partial flow of the second step constitutes at least 10 vol% of the scrubbing liquid in the scrubbing zone per hour.

15. A system for performing the method of claims 1-14, the system comprising a scrubbing zone (2) having means for contacting a flue gas with an aqueous scrubbing liquid, wherein the scrubbing zone (2) is fluidly connected to a first regeneration zone (3, 4, 5, 6, 7, 8, 9, 10, 11, 12), wherein the system further comprises a second regeneration zone (13, 14, 15, 16, 18) fluidly connected to the first regeneration zone and means to recirculate a fluid from the first regeneration zone to the scrubbing zone, wherein the respective first and the second regeneration zones each comprise means for pH adjustment (7, 8, 16, 17) of the treated liquid by addition of CaO, CaCO₃, Ca(OH)₂ or a mixture thereof.
